# Europäisches Patentamt
## European Patent Office
## Office européen des brevets

(19)

(11) Veröffentlichungsnummer: **0 166 716**
A2

(12) **EUROPÄISCHE PATENTANMELDUNG**

(21) Anmeldenummer: **85890127.5**

(22) Anmeldetag: **10.06.85**

(51) Int. Cl.⁴: **B 01 J 3/02, C 10 B 57/10**

(30) Priorität: **25.06.84 AT 2047/84**

(43) Veröffentlichungstag der Anmeldung: **02.01.86**
**Patentblatt 86/1**

(84) Benannte Vertragsstaaten: **BE CH DE FR GB IT LI LU NL SE**

(71) Anmelder: **VOEST-ALPINE Aktiengesellschaft, Friedrichstrasse 4, A-1011 Wien (AT)**

(72) Erfinder: **Schierl, Walter, Am weissen Kreuz 5, A-8940 Liezen (AT)**
Erfinder: **Tessmer, Gero, Blütenstrasse 21, A-4040 Linz (AT)**

(74) Vertreter: **Haffner, Thomas M., Dr. et al, Patentanwaltskanzlei Dipl.-Ing. Adolf Kretschmer Dr. Thomas M. Haffner Schottengasse 3a, A-1014 Wien (AT)**

(54) Druckschleuse mit einer Mehrzahl von dichtend in einem Gehäuse angeordneten drehbar gelagerten Kammern.

(57) Eine Druckschleuse (1, 2, 3) mit einer Mehrzahl von dichtend in einem Gehäuse in Umfangsrichtung verteilt angeordneten, drehbar gelagerten Kammern weist am Gehäuse zwei Anschlüsse (7, 11) für den Eintrag und den Austrag von Material sowie wenigstens zwei zusätzliche, in Umfangsrichtung des Gehäuses versetzte Anschlüsse une wenigstens eine Druckausgleichsleitung (8, 9) auf, die einen in Drehrichtung (6) der Druckschleuse (1, 2, 3) vor dem Eintragsanschluss (7) und/oder dem Austragsanschluss (11) liegenden Anschluss mit einem in Drehrichtung (6) nach dem Eintragsanschluss (7) und/oder dem Austragsanschluss (11) liegenden Anschluss verbindet.

- 1 -

## Druckschleuse mit einer Mehrzahl von dichtend in einem Gehäuse angeordneten drehbar gelagerten Kammern

Die Erfindung bezieht sich auf eine Druckschleuse mit einer Mehrzahl von dichtend in einem Gehäuse in Umfangsrichtung verteilt angeordneten, drehbar gelagerten Kammern und zwei Anschlüssen am Gehäuse für den Eintrag und den Austrag von Material, sowie wenigstens zwei zusätzlichen, in Umfangsrichtung des Gehäuses versetzten Anschlüssen. Derartige Druckschleusen, welche auch als Flügelzellenschleusen oder Rotationsdruckschleusen bezeichnet werden, dienen dazu, Material unter Aufrechterhaltung eines druckdichten Abschlusses in Autoklaven einzubringen oder auszuschleusen. Insbesondere finden derartige Druckschleusen auch dann Verwendung, wenn Material von einem Druckniveau in Behälter, welche unter einem von diesem ersten Druckniveau verschiedenen Druck stehen, übergeführt werden soll. Die bekannten Ausbildungen derartiger Druckschleusen sahen außer einem Anschluß für das Aufgeben des Materials und einem Anschluß für den Austrag des Materials keine weiteren Anschlüsse vor. Bei Förderung von Material ausgehend von einem drucklosen Zustand in einen Autoklaven, in welchem ein vorbestimmter Druck herrscht, wurde daher zumindest ein Kammervolumen bei einer vollen Umdrehung der Druckschleuse vollständig entspannt. Im Fall von unter Dampfdruck stehenden Autoklaven bedeutet dies einen beträchtlichen Dampfverlust. Bei hohen Druckdifferenzen kann es darüber hinaus zu explosionsartiger Entspannung kommen, welche gleichfalls unerwünscht ist.

Eine Druckschleuse der eingangs genannten Art ist aus der DE-A 1 794 409 zu entnehmen. Bei dieser bekannten Ausbildung wurden die Zellen bzw. Kammern nach dem Passieren der Eintragsöffnung evakuiert und anschließend vor dem Erreichen der Austragsöffnung ein Druckausgleich auf den austragsseitigen Druck vorgenommen, um gefährliche Dämpfe am unkontrollierten Entweichen zu verhindern und eine Vermischung der Gasphasen am Eintrag und am Austrag hintanzuhalten. Bei großen Druckdifferenzen zwischen Eintragsseite und Austragsseite bringt dies jedoch eine starke mechanische Belastung der Schleuse mit sich.

Die Erfindung zielt nun darauf ab, eine Druckschleuse der eingangs genannten Art dahingehend weiterzubilden, daß der Druckabbau oder Druckaufbau stufenweise erfolgt, um die mechanische Belastung der Schleuse, insbesondere bei hohen Druckdifferenzen, zu verringern. Beim Austrag gegen die Atmosphäre soll gleichzeitig eine weitgehende Rückgewinnung von unter Druck stehendem Medium ermöglicht werden. Zur Lösung dieser Aufgabe besteht die Erfindung im wesentlichen darin, daß wenigstens eine Druckausgleichsleitung einen in Drehrichtung der Druckschleuse vor dem Eintragsanschluß und/oder dem Austragsanschluß liegenden Anschluß mit einem in Drehrichtung nach dem Eintragsanschluß und/oder dem Austragsanschluß liegenden Anschluß verbindet. Dadurch, daß wenigstens zwei zusätzliche Anschlüsse in Umfangsrichtung versetzt an das Gehäuse angeschlossen sind, welche über Leitungen miteinander verbindbar sind, wird der Vorteil erreicht, daß einzelne Kammern, bevor sie mit dem Aufgabeanschluß fluchten, teilweise gegen eine andere, gegenüber dem Aufgabeanschluß abgeschlossene Kammer entspannt werden können, so daß die teilweise entspannte Kammer zu dem Zeitpunkt, in welchem sie mit dem Aufgabeanschluß fluchtet, nur mehr eine geringere Druckdifferenz zu dem Druckniveau am Aufgabeanschluß aufweist. Gleichzeitig weist diejenige Kammer, mit welcher der Druckausgleich vorgenommen wurde, auf ihrem Weg zum Austragsanschluß für das Material gleichfalls bereits wiederum einen Druck auf, welcher eine geringere Druckdifferenz zum Aufgabeanschluß ergibt. Im Falle der Förderung von Material von atmosphärischem Druck auf einen relativ zum Atmosphärendruck höheren Innendruck eines Autoklaven erfolgt eine Entspannung unter Druckverminderung aus der sich in Richtung zum Aufgabeanschluß bewegenden Kammer in eine sich in Richtung zum

- 3 -

Austragsanschluß bewegende Kammer. Bei einer Druckschleuse zum Ausschleusen von Material unter einem höheren Druck in Richtung einer Austragsöffnung unter atmosphärischem Druck erfolgt der Druckausgleich naturgemäß in einer der Drehrichtung der Schleuse entgegengesetzten Richtung. Auf diese Weise wird bei geringem Leitungsaufwand der Druckausgleich innerhalb der Schleuse selbst zwischen einzelnen Kammern vorgenommen, so daß ein Großteil des Druckmediums im Kreis geführt wird und nur geringe Druckmediumverluste auftreten. Eine derartige Ausbildung ist insbesondere bei unter Dampfdruck stehenden Autoklaven besonders vorteilhaft, da sich die Energiebilanz durch die Verringerung der Dampfverluste wesentlich verbessern läßt. Bei hohen Druckdifferenzen, insbesondere bei unter hohem Dampfdruck stehenden Autoklaven, hat diese Ausbildung darüber hinaus den Vorteil, daß die große Druckdifferenz nie schlagartig an der Eintrags- bzw. der Austragsöffnung auftritt und daß daher die mechanische Beanspruchung der Druckschleuse wesentlich verringert wird.

Der Druckausgleich zwischen einzelnen Kammern kann über mehrere Stufen vorgenommen werden und neben einem Druckausgleich zwischen einzelnen Kammern der gleichen Druckschleuse kann auch ein Druckausgleich gegen externe Druckspeicher, Autoklaven oder vorangehende bzw. nachfolgende Druckschleusen vorgenommen werden. In jedem Fall ist es hiebei vorteilhaft, wenn die Ausbildung so getroffen ist, daß die Zahl der Anschlüsse an das Gehäuse kleiner oder gleich der Zahl der Kammern der Druckschleuse ist, so daß eine klare Zuordnung der einzelnen Anschlüsse zu einzelnen Kammern ermöglicht wird.

Mit Rücksicht auf die relativ zur Aufgabe- bzw. zur Austragsöffnung der Schleuse in jedem Falle auch nach einem Druckausgleich noch bestehende Druckdifferenz ist es besonders vorteilhaft, wenn in Drehrichtung voreilend neben einem Eintragsanschluß und/oder einem Austragsanschluß ein Entlastungsanschluß vorgesehen ist, welcher über eine Leitung mit einer dem Eintrags- oder Austragsdruck entsprechenden Druckquelle, insbesondere dem Eintrags- bzw. Austragsanschluß verbindbar ist. Auf diese Weise befindet sich diejenige Kammer, welche mit dem Eintrags- bzw. Austragsanschluß fluchtet, zu dem jeweiligen Zeitpunkt ihres Fluchtens auf dem entsprechenden Druckniveau, so daß der rasche Ein- und Austrag des Materials unter Einwirkung der Schwerkraft in keiner Weise durch entgegenströmendes Medium behindert wird. Die jeweils dem Eintrags- oder Austragsdruck entsprechende Druckquelle kann beispielsweise unmittelbar der unter Druck stehende Autoklav, in welchen gefördert werden soll, bzw. der Atmosphärendruck, aus welchem das Material eingetragen werden soll, sein.

Um eine exakte Unterteilung ohne unerwünschte Überschleifungen der Anschlüsse bei unkontrolliertem Druckausgleich zu ermöglichen, ist die Ausbildung in vorteilhafter Weise so getroffen, daß der Abstand der Anschlüsse in Umfangsrichtung des Gehäuses dem Abstand der Winkelsymmetralen benachbarter Kammern bzw. einem ganzzahligen Vielfachen dieses Abstandes entspricht. Eine derartige Ausbildung erlaubt es, den gewünschten Druckausgleich auch bei hohen Drehgeschwindigkeiten der Druckschleuse sicher vorzunehmen, wobei jeweils der volle maximale, für einen derartigen Druckausgleich zur Verfügung stehende Zeitraum genutzt werden kann.

Prinzipiell läßt sich die erfindungsgemäße Ausbildung so verwenden, daß man zusätzliche Anschlüsse mit einer entsprechenden Anzahl von auf verschiedenem Druckniveau gehaltenen Druckspeichern verbindet. In vorteilhafter Weise kann bei mehrstufiger Förderung gegen ansteigendes Druckniveau wenigstens eine Druckausgleichsleitung von einem Anschluß einer in Förderrichtung nachgeschalteten Druckschleuse zu einer vorangehenden Stufe bzw. einem Anschluß einer in Förderrichtung vorangehenden Druckschleuse führen. Auf diese Weise kann ein zusätzlicher Druckausgleich für hohe Druckdifferenzen, wie er innerhalb einer einzelnen Rotationsdruckschleuse nicht mehr möglich ist, durch Miteinbeziehen weiterer, insbesondere benachbarter Druckschleusen vorgenommen werden.

Im Rahmen von Kohletrocknungsanlagen, bei welchen zu trocknendes Gut zumeist vom Atmosphärendruck in einen unter Dampfdruck stehenden Autoklaven gefördert wird und aus derartigen unter Dampfdruck stehenden Autoklaven gegen unter Atmosphärendruck stehende Einrichtungen ausgeschleust wird, hat sich eine Druckschleuse als besonders vorteilhaft herausgestellt, welche als Schleuse mit wenigstens sieben, vorzugsweise wenigstens acht Kammern und sieben bzw. acht in Umfangsrichtung verteilten Anschlüssen ausgebildet ist.

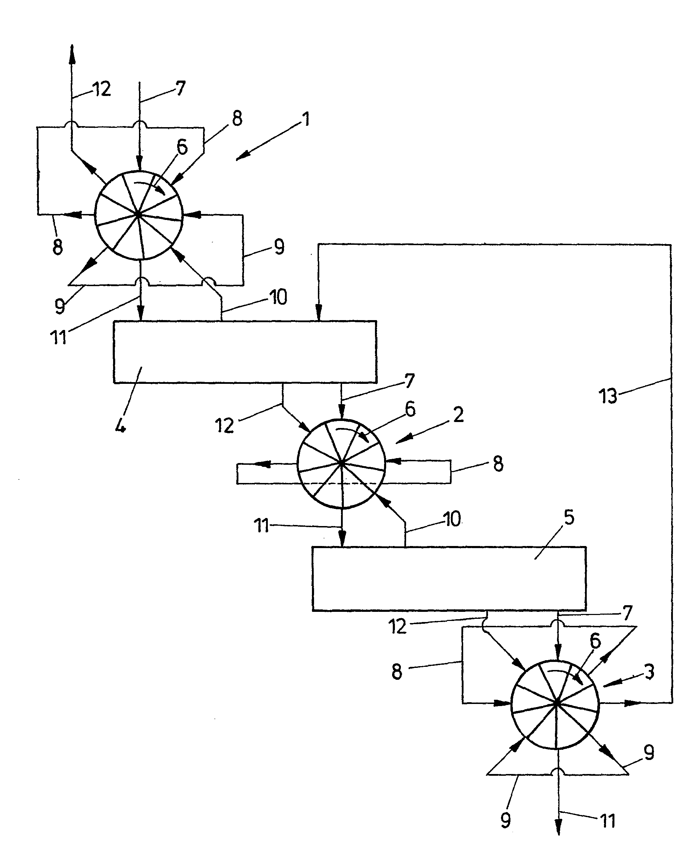

Die Erfindung wird nachfolgend an Hand eines in der Zeichnung schematisch dargestellten Ausführungsbeispieles näher erläutert.

In der Zeichnung ist ein Dampfausgleichsystem für Druckschleusen im Rahmen einer kontinuierlich arbeitenden Trocknungsanlage für Braunkohle schematisch erläutert. Es sind drei Rotationsdruckschleusen 1, 2 und 3 vorgesehen. Mit der Rotationsdruckschleuse 1 wird unter Atmosphärendruck stehendes Material aus einer Einlaufschurre in eine unter Dampfdruck stehende Vorwärmtrommel 4 gefördert. Die Rotationsdruckschleuse 2 fördert das Material aus dieser unter Dampfdruck stehenden Vorwärmtrommel 4 in eine unter relativ zum Dampfdruck in der Vorwärmtrommel höherem Dampfdruck stehende Trocknungseinrichtung 5, welche beispielsweise als Siebtrommel ausgebildet sein kann. Die Rotationsdruckschleuse 3 schließlich fördert das Material aus der Trocknungseinrichtung 5 gegen Atmosphärendruck ab.

Die einzelnen Druckschleusen weisen bei dem gezeigten Ausführungsbeispiel jeweils neun Kammern bzw. Zellen auf, welche dichtend in einem Gehäuse drehbar gelagert sind. Über den Umfang des Gehäuses der Druckschleusen sind einzelne Anschlüsse vorgesehen, welche über Leitungen miteinander verbunden bzw. mit der Atmosphäre oder der Vorwärmtrommel verbunden sind. Die Schleuse 1 weist hiefür acht Anschlüsse auf, wohingegen die Druckschleuse 2 lediglich sechs Anschlüsse aufweist, welche mit Leitungen belegt sind. Die Druckschleuse 3 weist wiederum acht Anschlüsse, welche mit Leitungen belegt sind, auf.

Die Funktion der dargestellten Einrichtung ergibt sich unmittelbar aus der Betrachtung der Verhältnisse, wie sie durch Drehen der Schleusenräder in Richtung der Pfeile 6, d.h. somit im Uhrzeigersinn ersichtlich wird. Bei der Schleuse 1 gelangt die erste Kammer, welche mit der Einlaufschurre unter Atmosphärendruck über eine Aufgabeleitung 7 verbunden ist, nach einer entsprechenden Umdrehung in Richtung des Pfeiles 6 in den Bereich des Anschlusses einer Überströmleitung 8. Durch diese Überströmleitung 8 erfolgt ein Druckausgleich, wobei die Kammer, welche ursprünglich drucklos war, nunmehr mit einem Druck beaufschlagt wird. Über eine zweite Überströmleitung 9 erfolgt in der Folge ein weiterer Druckausgleich, wobei die Richtung des überströmenden Mediums jeweils durch die Richtung der Pfeile in den Leitungen 8 und 9 angedeutet wird. Die auf diese Weise auf neuerlich erhöhtem Druck befindliche Kammer bewegt sich bei ihrer Rotation im Sinne des Pfeiles 6 in Richtung einer Druckentlastungsleitung 10, über welche der volle Betriebsdruck der nachfolgenden Einrichtung 4 in die Kammern eingebracht wird. Sobald die Kammer nunmehr in eine Lage gelangt, bei welcher das Material in die Vorwärmtrommel 4 ausgetragen wird, wofür eine Leitung 11 vorgesehen ist, befindet sich diese Kammer bereits auf dem vollen Betriebsdruck, so daß der Austrag in die Vorwärmtrommel nicht durch entgegenströmendes Medium behindert wird. Nach dem Austragen des Materials in die Vorwärmtrommel bewegt sich die Kammer in Richtung eines Abschnittes, an welchen die Überströmleitung 9 angeschlossen ist, so daß ein erster Teil des Betriebsdruckes abgebaut wird. Ein weiterer Teil des noch verbleibenden Betriebsdruckes wird über die Überströmleitung 8 abgebaut, worauf schließlich der verbleibende Restdruck über eine Entlastungsleitung 12 gegen die Atmosphäre abgebaut werden kann, bevor neuerlich über die Leitung 7 ein Beschicken der Druckschleuse erfolgt.

Bei der Druckschleuse 2 sind die der Druckschleuse 1 entsprechenden Leitungen mit den gleichen Bezugsziffern bezeichnet. Bei dieser Druckschleuse ist lediglich eine Überströmleitung 8 vorgesehen. Da sowohl die Vorwärmtrommel als auch die nachfolgende Trocknungseinrichtung 5 unter Dampfdruck stehen, findet hier ein Dampfverlust nicht statt, so daß mit einem einmaligen Druckausgleich das Auslangen gefunden werden kann, ohne die Energiebilanz zu verschlechtern.

Bei der Austragsschleuse 3 erfolgt zusätzlich zu dem Druckausgleich über die Überströmleitungen 8 und 9 noch ein Druckausgleich über eine Leitung 13 relativ zum Druck in der Vorwärmtrommel. Da bei der Austragsschleuse 3 gegen atmosphärischen Druck ausgebracht wird, ist ein Druckausgleich der Kammer vor dem Anschluß an die Austragsleitung 11 nicht notwendig, da die Strömungsrichtung des verbleibenden Druckes und des auszutragenden Gutes in die gleiche Richtung nach außen führt. Ein gegenströmendes Medium, welches den Austrag behindern könnte, tritt somit hier nicht auf.

Die Rotationsschleusen können mit einem Füllungsgrad von etwa 60 % bei kontinuierlicher Drehzahl betrieben werden. Eine Erhöhung oder Verminderung der Durchsatzrate kann durch synchrone Steuerung bzw. Regelung der Rotationsgeschwindigkeiten der einzelnen Rotationsdruckschleusen 1, 2 bzw. 3 vorgenommen werden. In der Praxis hat es sich gezeigt, daß bei der in der Zeichnung dargestellten Anordnung Druckdifferenzen von 25-50 bar ohne weiteres bewältigt werden können, ohne daß dies zu einer Überlastung der Rotationsdruckschleusen führt. Trotz der hohen möglichen Druckdifferenzen können die üblichen Konstruktionen für die Lagerung der Zellenräder der Rotationsdruckschleusen beibehalten werden, da die mechanische Belastung der einzelnen Zellen und der Zellenräder im Vergleich zur konventionellen Ausführung der Druckschleusen wesentlich geringer bleibt.

An Stelle von Vorwärmtrommeln und Siebtrommeln können naturgemäß beliebige andere unter Druck stehende Autoklaven in beliebigen Prozessen Verwendung finden. Vor allen Dingen bei mit Dampf gefahrenen Verfahren ist der Druckausgleich nicht nur auf Grund der Verbesserung der Wärmebilanz, sondern auch auf Grund der bei hohen Dampfdrücken explosionsartig verlaufenden Entspannung besonders vorteilhaft.

Patentansprüche:

1. Druckschleuse mit einer Mehrzahl von dichtend in einem Gehäuse in Umfangsrichtung verteilt angeordneten, drehbar gelagerten Kammern und zwei Anschlüssen (7, 11) am Gehäuse für den Eintrag und den Austrag von Material, sowie wenigstens zwei zusätzlichen, in Umfangsrichtung des Gehäuses versetzten Anschlüssen, dadurch gekennzeichnet, daß wenigstens eine Druckausgleichsleitung (8, 9) einen in Drehrichtung (6) der Druckschleuse vor dem Eintragsanschluß (7) und/oder dem Austragsanschluß (11) liegenden Anschluß mit einem in Drehrichtung nach dem Eintragsanschluß (7) und/oder dem Austragsanschluß (11) liegenden Anschluß verbindet.

2. Druckschleuse nach Anspruch 1, dadurch gekennzeichnet, daß die Zahl der Anschlüsse an das Gehäuse kleiner oder gleich der Zahl der Kammern der Druckschleuse (1, 2, 3) ist.

3. Druckschleuse nach Anspruch 1 oder 2, dadurch gekennzeichnet, daß in Drehrichtung (6) voreilend neben einem Eintragsanschluß (7) und/oder einem Austragsanschluß (11) ein Entlastungsanschluß vorgesehen ist, welcher über eine Leitung (10, 12) mit einer dem Eintrags- oder Austragsdruck entsprechenden Druckquelle verbindbar ist.

4. Druckschleuse nach Anspruch 1, 2 oder 3, dadurch gekennzeichnet, daß der Abstand der Anschlüsse in Umfangsrichtung des Gehäuses dem Abstand der Winkelsymmetralen benachbarter Kammern bzw. einem ganzzahligen Vielfachen dieses Abstandes entspricht.

5. Druckschleuse nach einem der Ansprüche 1 bis 4, dadurch gekennzeichnet, daß bei mehrstufiger Förderung gegen ansteigendes Druckniveau wenigstens eine Druckausgleichsleitung (13) von einem Anschluß einer in Förderrichtung nachgeschalteten Druckschleuse (3) zu einer vorangehenden Stufe (4) bzw.

einem Anschluß einer in Förderrichtung vorangehenden Druckschleuse (1, 2) führt.

6. Druckschleuse nach einem der Ansprüche 1 bis 5, dadurch gekennzeichnet, daß für die Aufgabe von im wesentlichen unter Atmosphärendruck stehendem Material bzw. für den Austrag von unter Druck stehendem Material gegen Atmosphärendruck eine Schleuse (1, 3) mit wenigstens sieben, vorzugsweise wenigstens acht Kammern und sieben bzw. acht in Umfangsrichtung verteilten Anschlüssen vorgesehen ist.